Europäisches Patentamt

European Patent Office

Office européen des brevets

(19)

(11) Publication number: 0 366 486
A2

# EUROPEAN PATENT APPLICATION

(21) Application number: 89311117.9

(22) Date of filing: 27.10.89

(51) Int. Cl.5: C08F 297/02 , C08L 53/00

(30) Priority: 27.10.88 JP 271392/88

(43) Date of publication of application:
02.05.90 Bulletin 90/18

(84) Designated Contracting States:
DE FR GB IT

(71) Applicant: NIPPON ZEON CO., LTD.
6-1, 2-chome, Marunouchi, Chiyoda-ku
Tokyo(JP)

(72) Inventor: Komuro, Keiji
Parkside residence 503, 1-4-13,
Tsunashima-nishi
Kohoku-ku Yokohama-shi Kanagawa-ken(JP)
Inventor: Watanabe, Hiroyuki
669-8, Izumi-cho Izumi-ku
Yokohama-shi Kanagawa-ken(JP)
Inventor: Onishi, Hidenori
873, Taibi-cho Kohoku-ku
Yokohama-shi Kanagawa-ken(JP)

(74) Representative: Myerscough, Philip Boyd et al
J.A.Kemp & Co. 14, South Square Gray's Inn
London, WC1R 5EU(GB)

(54) A shape-memorizable block copolymer, the method of using it and shape memory products.

(57) A block copolymer having shape memory properties, which comprises at least two polymer segments A having glass transition temperatures of 60 °C to 250 °C and at least one amorphous polymer segment B having a glass transition temperature of not less than -30 °C and at least 20 °C below the lowest glass transition temperature of any of the polymer segments A, the ratio by weight of all the polymer segments A to all of the polymer segments B being 10/90 to 70/30, A method of making shape-memory products therefrom is also described.

EP 0 366 486 A2

# A SHAPE-MEMORIZABLE BLOCK COPOLYMER, THE METHOD OF USING IT AND SHAPE MEMORY PRODUCTS

The present invention relates to a block copolymer having shape-momorizable properties, a method of using such copolymer and shape memory products produced therefrom. More particularly, the present invention relates to a shape-memorizable block copolymer having excellent processability and transparency, a method of using it and shape-memory products made therefrom.

A shape-memorizable resin is a resin having a property such that it memorizes a three-dimensional shape A imposed under condition No. 1 and even if it is deformed under condition No. 2 to a quite different shape B from the shape A, it will recover the original shape A when it is further subjected to condition No. 3.

As a resin which exhibits shape-memorizable properties, a polynorbornene-type shape-memorizable resin is known (Japanese Laid-Open Patent Publication No. 53528/1984). However, this polynorbornene-type shape-memorizable resin does not have an entirely satisfactory processability and fluidity for injection molding. In order to solve this problem, a composition composed of norbornene-type polymers and aromatic-vinyl-type copolymer resins (Japanese Laid-Open Patent Publication No. 188444/1986), and a composition of norbornene-type polymers and polyester-type resins (Japanese Laid-Open Patent Publication No. 54460/1988), etc. have been proposed. However, up to the present time, no single polymer has been invented, which is capable of solving the aforementioned problems.

It is an object of the present invention, therefore, to develop a shape-memorizable resin having an excellent shape-memorizable properties, processability and fluidity, a method of use thereof and a shape-memory product produced therefrom.

The present inventors have made extensive investigations in order to achieve this object, and have found that a block copolymer having a specified composition has the above described excellent characteristics, thus completing the present invention.

Thus, according to the present invention, there is provided a shape-memorizable block copolymer comprising (A) at least two polymer segments having a glass transition temperature of $60\,^{\circ}$C to $250\,^{\circ}$C (polymer segment A), and (B) at least one amorphous polymer segment having a glass transition temperature of not less than $-30\,^{\circ}$C and not less than $20\,^{\circ}$C lower than the lowest segment of all of the polymer segments A (polymer segment B), wherein the ratio by weight of all of the polymer segments A to all of the polymer segments B is 10/90 to 70/30.

According to the present invention, also, there is provided a method of using a shape-memorizable block copolymer such that it memorizes the shape when it is molded by molding it at a temperature of not less than the highest glass transition temperature of all of the polymer segments A; then deforming this molded block copolymer to an arbitrary shape at a lower temperature than the lowest glass transition temperature of all of the polymer segments A, afterwards fixing that deformation by cooling at a temperature of not more than the lowest glass transition temperature of all of the polymer segments B; releasing the aforesaid fixed deformation by heating the deformed copolymer at a prescribed temperature within a range of between a lower temperature than the lowest glass transition temperature of all of the polymer segments A and a temperature higher than the highest glass transition of all of the polymer segments B; thereby having the copolymer recover the shape memorized when it was molded.

According to the present invention, there is further provided a shape-memory product obtained by molding said shape-memorizable block copolymer at a temperature not less than the highest glass transition temperature of all of the polymer segments A.

The glass transition temperature of the polymer segment A used for the present invention is between $60\,^{\circ}$C and $250\,^{\circ}$C, preferably $80\,^{\circ}$C to $200\,^{\circ}$C. It is a disadvantage when the glass transition temperature of a polymer segment A is lower than $60\,^{\circ}$C because the use temperature of the block copolymer thus obtained as a shape-memorizable resin becomes too low, and also, when the glass transition temperature of a polymer segment A is higher than $250\,^{\circ}$C, the temperature required to process the block copolymer becomes too high.

The monomers which can be employed for the preparation of a polymer segment A in the present invention is not particularly restricted. Examples of these monomers are aromatic vinyl monomers such as styrene, α-methylstyrene, vinyl toluene, vinyl naphthalene, isopropenyl naphthalene, vinyl pyridine, isopropenyl pyridine, isopropenyl quinoline; conjugated diene-type monomers such as butadiene, isoprene, piperylene, phenyl butadiene, 1,4-diphenyl butadiene; acrylate-type monomers such as methyl acrylate, ethyl acrylate, methyl methacrylate, ethyl methacrylate, glycidyl methacrylate; vinyl ethers such as methyl vinyl ether; and isobutylene. These monomers may be used singly or in combinations of more than one.

The polymer segment A used in the present invention preferably includes an aromatic vinyl monomer unit. More preferably, it is a homopolymer of an aromatic vinyl monomer, a copolymer of an aromatic vinyl monomer and another aromatic vinyl monomer copolymerizable therewith, or a copolymer of not less than 50 % thereof of aromatic vinyl monomer units and a conjugated diene-type monomer.

The weight average molecular weight, calculated for polystyrene, of the polymer segment A used in the present invention is 5,000 to 300,000, preferably 10,000 to 200,000.

In the present invention, more than one of polymer segments A are used, which may be different from one another in molecular weight and composition, etc., as long as they are soluble with one another.

The amorphous polymer segment B used in the present invention must have a glass transition temperature of not less than -30 °C and not less than 20 °C lower than the lowest glass transition temperature of the polymer segment A, and preferably has a glass transition temperature of 0 °C to 60 °C.

When the glass transition temperature of the polymer segment A is lower than -30 °C, the temperature of use as a shape-memorizable resin becomes too low. Also, when the difference between the glass transition temperature of the polymer segments B and the lowest glass transition temperature of all of the polymer segments A is lower than 20 °C, the shape recovery properties of the block copolymer produced therefrom is lowered. It is required that the polymer segment B be amorphous because, if not, the rate of shape recovery of the block copolymer thus obtained is lowered.

The monomers used for the synthesis of polymer segment B are not particularly restricted and may be the same monomers used to produce polymer segment A described above, for example, but not restricted thereto. The examples of the polymer segments B described below will show that the monomers used may be the same as the above described monomers used to synthesize the polymer segment A.

The polymer segment B used in the present invention is preferably a homopolymer of a conjugated diene monomer or a copolymer of a conjugated diene-type monomer and another conjugated diene-type monomer copolymerizable therewith, or a copolymer of a conjugated diene-type monomer and an aromatic vinyl monomer, more preferably, a copolymer of a conjugated diene-type monomer and an aromatic vinyl monomer. If the proportions of the conjugated diene-type monomer units in these polymers is too low, the shock resistance of the block copolymer is lowered and, on the other hand, if it is too high, the temperature of use as a shape-memorizable resin of the block copolymer thus obtained is too low. A copolymer wherein the ratio by weight of the conjugated diene-type monomer units to the aromatic vinyl monomer units is 70/30 to 5/95 is particularly preferred.

The weight average molecular weight, calculated for polystyrene, of the polymer segment B used in the present invention is 10,000 to 300,000, preferably 20,000 to 200,000.

In the present invention when more than one of the polymer segments B are used, which segments may be different from one another in molecular weight and in composition, as long as these polymer segments B have sufficient compatibility with one another.

There is no restriction on the method for preparing the polymer segments A and B, therefore, conventionally known methods may be employed.

The ratio by weight of the polymer segments A to the polymer segments B is 10/90 to 70/30, preferably 20/80 to 50/50. If the weight ratio is lower than 10 % by weight, the shape-memorizable properties are lowered. Also, if the weight ratio exceeds 70 % by weight, the block copolymer is brittle and is inferior in shock resistance.

The weight average molecular weight, calculated for polystyrene, of the block copolymer of the present invention is usually 50,000 to 800,000, preferably 100,000 to 500,000. If this molecular weight is less than 50,000, the mechanical properties of the block copolymer are lowered, and if it exceeds 800,000, the moldability is lowered.

The structure of the block copolymer of the present invention is not restricted if it satisfies the above conditions. For example, the general formula of $(A-B)_l A$, $(A-B)_m$ or $(A-B)_n X$, wherein A represents the above mentioned polymer segments A; B represents the above mentioned polymer segments B; 1 stands for an integer of 1 to 5; m stands for an integer of 2 to 5; n stands for an integer of 2 to 10; and X represents a residue of a coupling agent having 2 to 10 functionalities, can be used. Also, structures wherein singular or plural polymer chains having the polymer segment A and the polymer segment B branched from plural points of a main chain may be used, which includes the polymer segment A and/or the polymer segment B.

There is no restriction on the coupling agents having 2 to 10 functional groups used for the block copolymer of the present invention. Examples are phenyl acetate, ethyl benzoate, dichlorosilane, dimethyldichlorosilane, dibutyldibromotin, methyltrichlorosilane, phenyltrichlorosilane, methylbromosilane, silicon tetrachloride, tetramethoxysilane, tin tetrachloride, (dichloromethyl)trichlorosilane, (dichlorophenyl)-trichlorosilane, hexachlorodisilane, hexachlorodisiloxane, 1,2,3,4,7,7-hexachloro-6-methyldichlorosilyl-2-norbornene, octachlorotrisiloxane, divinylbenzene, etc.

The process for synthesizing the block copolymer of the present invention is not particularly restricted and conventionally known processes, such as a living anionic polymerization process, a group transfer polymerization process and a living cationic polymerization process are adopted. As examples of such processes there may be used a process for the synthesis of a polymer segment A and a polymer segment B by turns, one after another, by use of a living polymerization initiator having one functionality; a process wherein a polymer block consisting of the polymer segment A and the polymer segment B is synthesized and then it is coupled on a part of a polymer segment B; and a process wherein a polymer segment B is synthesized by use of a living polymerization initiator having two functionalities and to its both ends a polymer segment A is synthesized, etc.

In these living polymerization processes, there is no restriction on the nature of the polymerization initiator, however, the use of lithium-type polymerization is preferred in respect of the easiness in which the block copolymer of the present invention can be produced. If necessary, softeners, plasticizers, antioxidants, thermal stabilizers, ultraviolet ray absorbents, fillers and other compounding agents may be added as long as these do not alter the effects of the invention. The softeners used in the present invention are those conventionally used in polymer resin materials. Examples are extender oils of an aromatic-type, paraffin-type or naphthene-type; and liquid polymers such as polybutene and polyisobutylene.

Examples of plasticizers used in the present invention include conventionally known phthalate-type plasticizers such as dibutyl phthalate, dioctyl phthalate and di-(2-ethylhexyl)phthalate, etc.; phosphate-type plasticizers such as tricresyl phosphate, etc.; fatty acid-type plasticizers and epoxy-type plasticizers.

Examples of antioxidants used either alone or in a mixture thereof include hindered phenol-type compounds, such as 2,6-di-tert-butyl-p-cresol and di-tert-butyl-4-methylphenol, etc.; thiocarboxylate esters such as dilaurylthio propionate, etc. and phosphites such as tris(nonylphenyl)phosphite, etc.

Examples of fillers include titanium oxide, calcium carbonate, clay, talc, mica, bentonite, silica and carbon, etc.

The shape-memory product of the present invention is obtained by molding the shape-memorizable block copolymer by processes conventionally known, such as extrusion molding, injection molding and press molding, etc. at a temperature of not less than the highest glass transition temperature of all of the polymer segments A. There is no restriction on the form of the products.

The shape-memorizable block copolymer memorizes the shape at the time of molding by molding at a temperature of not less than the highest glass transition temperature (to be sometimes referred to as $TgA_H$). When the molding temperature is lower than $TgA_H$ and not less than the lowest glass transition temperature of all of the polymer segments A (to be sometimes referred to as $TgA_L$), a part which does not have shape-memorizable properties is produced, and when the molding temperature is lower than $TgA_L$, shape-memorizable properties will not be given to the products.

There is no restriction on the molding process and any kind of conventional molding process may be used, such as extrusion molding, injection molding and press molding, etc. This molded block copolymer is deformed into an optional shape by one of the processes described above, under a temperature of $TgA_L$. If this temperature (deformation temperature) is not less than $TgA_L$, one or all part of the memory of the copolymer is lost. Then the deformation is fixed by cooling up to a temperature of not less than the lowest glass transition temperature of all of the polymer segments B (to be sometimes referred to as $TgB_L$). If the temperature at this time (deformation fixing temperature) is within a range of between not more than the highest glass transition temperature of all of the polymer segments B (to be sometimes referred to as $TgB_H$) and exceeds the temperature of $TgB_L$, the deformation is insufficiently fixed. If it exceeds the temperature of $TgB_H$, it is impossible to fix the deformation. Besides, if the deformation temperature is not more than the temperature of $TgB_L$, it is not necessary to substantially fix the deformation because the deformation is fixed at the same time.

As means for fixing the deformation of the copolymers, there may be used methods in which the block copolymer is placed into a medium, such as cool water, refrigerants, cool air, etc. However, the means for fixing the deformation is not restricted to these methods. The fixing of the deformation of the block copolymer is released by heating the block copolymer to a temperature lower than the temperature of $TgA_L$ and higher than the temperature of $TgB_H$ (shape return temperature), and then it is returned to the shape it has memorized when it was molded. The higher the shape return temperature, the faster the speed of the shape return. However, if it is not less than the temperature of $TgA_L$, one or all parts of the memory of the shape are lost. The means for heating is not particularly restricted and the methods which utilize electricity, warm water, hot water, steam, warm or hot air, etc. can be employed by way of illustration.

Thus, according to the present invention, a shape-memorizable block copolymer having an excellent processability and transparency can be obtained. This block copolymer can be deformed to an optional shape after the shape is memorized and this deformation is fixed and then the original shape is restored as occasion demands. Products having various kinds of forms which memorize the desired shape can be obtained from the block copolymer of the present invention. When the shapes are of an intricate or cumbersome construction and transportation is difficult, the products can be deformed, eg., reduced in size, to facilitate treatment. These products can be then used by restoring them to their original shape at the necessary time after they are transported or after they are constructed. The shape-memorizable block copolymers and the shape-memory products of the present invention can be used extensively in the field of various industrious products, medical supplies, decorations, toys, etc., by employing the above characteristics.

The following Examples specifically illustrate the present invention. All parts and % in Examples and Comparative Examples, except as otherwise provided, are by weight.

Also the molecular weight in the present Examples is a weight average molecular weight, calculated for polystyrene, as determined by high-speed liquid chromatography using tetrahydrofuran as a carrier.

## EXAMPLE 1

A 20 $\ell$ stainless steel polymerization reactor was charged with 7,200 g of cyclohexane and 160 g of styrene (monomer I) under an atmosphere of nitrogen.

After addition of 40 mmol of tetramethyl-ethylenediamine and 8.9 mmol of n-butyllithium as a polymerization initiator into the reactor, polymerization was carried out for 2 hours at 45°C to synthesize a polymer segment A.

Next, a mixture of 448 g of styrene and 192 g of butadiene (monomer II) prepared under an atmosphere of nitrogen in another stainless steel pressure reactor was added into the above-mentioned reactor at a rate of 5 g per minute, afterwards, a reaction was carried out for one hour and a polymer is obtained having polymerization active ends on a styrene/butadiene copolymer segment consisting of a styrene/butadiene copolymer segment (polymer segment B) bonded to a polystyrene segment (polymer segment A).

Subsequently, a coupling reaction of the above polymer having polymerization active ends was carried out after addition of 4.4 mmol of phenyl acetate (a coupling agent) dehydrated by molecular sieve previously incorporated into said polymer. Then, the reaction is completed by addition of 16 mmol of methanol. Further 0.2 part, based on the polymer, of 4-methyl-di-tert-butylphenol as an antioxidant was added thereto, mixed well and the thus-obtained mixed solution was added dropwise, little by little, into warm water heated at 85°C - 95°C to evaporate the solvent. The thus-obtained polymer was divided to yield a block copolymer by drying with hot air at 85°C.

The weight average molecular weight of the obtained polymer was 182,000. The glass transition temperature of a polymer segment A was 100°C and the weight average molecular weight was 19,000. The glass transition temperature of the polymer segment B was 25°C. The proportion by weight of the polymer segment A and the polymer segment B was 20/80. The amount of the vinyl structures in the butadiene units of a polymer segment B was 43.0%. The melt flow index of the block copolymer, determined by JIS K 7270, was 4.3 g/10 min.

This block copolymer was molded into pellets, a sheet having 1 mm of thickness was formed by press molding at 150°C and sample pieces of 100 mm of length was obtained from this sheet. A sample piece was extended in the direction of the length, up to 100 %, by heating it at 50°C (the length of it at this time was 200 mm) and such deformation was fixed by cooling to 15°C. Next, the shape was restored to its original shape by dipping this sample piece into warm water of 50°C. The length of this sample piece became 109 mm by shrinking. Therefore, if the shape-return rate (1) was defined as follows; the shape return-rate (1) = [(an amount of displacement at the time of 100 % extension - an amount of displacement after the shape return)/an amount of displacement at the time of 100 % extension] x 100, the shape-return rate (1) in this case was 91 %.

Next, a sample piece having a 100 mm of length and a 50 mm of width made of a sheet having a thickness of 1 mm obtained in the above mentioned way was heated up to 50°C, folded in two up to 180° at the middle in the direction of the length and the state of whitening was observed at the part of folding. No change was observed. This sample piece then was cooled to 15°C in this condition to fix it. Next, it was dipped in warm water of 50°C and was recovered to the folded state at an angle of 158° in the direction of the length. Therefore, if the shape-return rate (2) was defined as follows; the shape-return rate (2) = (a folding angle after the shape return/180°) x 100 (%), the shape-return rate (2) in this case was 88 %.

## EXAMPLES 2-8 AND COMPARATIVE EXAMPLES 1-3

Block copolymers having such properties as shown in Table 1 were obtained in the same way as in Example 1 except a monomer I, a monomer II and a coupling agent as shown in Table 1 were used. However, in Example 6, 2,2',17,17'-tetramethyl-4,15-diphenyldilithiumoctadecene as a polymerization initiator was used. According to this procedure in Example 6, first, poly(butadiene/styrene) having both polymerization active ends by copolymerization of butadiene and styrene was produced and second, a 2-vinyl pyridine was added in this reaction mixture and the polymerization was continued, and a poly(2-vinyl pyridine) - poly(butadiene/styrene) -poly(2-vinyl pyridine) block copolymer was obtained by finishing such polymerization without coupling.

In Comparative Example 3, the amount of polymerization initiator was half that of Example 1 and the polymerization of a monomer I was carried out and then, the polymerization of monomer II was carried out to produce a diblock copolymer having a structure of polystyrene-poly(butadiene/styrene) by finishing the polymerization without coupling. The same tests with these block copolymers were carried out as in Example 1, except both the temperature of extension of the sample pieces and the temperature of the warm water for dipping the sample pieces whose deformation was fixed was 25°C higher than the glass transition temperature of a polymer segment B of each block copolymer, and also the deformation fixing temperature was 10°C lower than the glass transition temperature of the polymer segment B of each block copolymer.

It will be seen from the results shown in Table 1 that the block copolymers and the shape-memory products of the present invention have excellent shape-memorizable properties, processability and transparency.

TABLE I

| | | Example | | | | | | | Comparative Example | | |
|---|---|---|---|---|---|---|---|---|---|---|---|
| | | 2 | 3 | 4 | 5 | 6 | 7 | 8 | 1 | 2 | 3 |
| Monomer I (g) | Styrene | 320 | 480 | 160 | 160 | | | 160 | 40 | 640 | 160 |
| | 2-Vinyl pyridiene | | | | | 160 | | | | | |
| | 3-Vinyl toluene | | | | | | 160 | | | | |
| Monomer II (g) | Styrene | 336 | 224 | 384 | 448 | 448 | 448 | 256 | 532 | 112 | 448 |
| | 1,3-Butadiene | 144 | 96 | | 192 | 192 | 192 | 384 | 48 | 48 | 192 |
| | Isoprene | | | 256 | | | | | | | |
| Coupling agent (mmol) | Phenyl acetate | 4.4 | 4.4 | 4.4 | | | 4.4 | 4.4 | 4.4 | 4.4 | |
| | Tetrachlorosilane | | | | 1.0 | | | | | | |
| Rate by weight of segment A/ segment B | | 40/60 | 60/40 | 20/80 | 20/80 | 20/80 | 20/80 | 20/80 | 6/94 | 80/20 | 20/80 |
| Glass transition temperature of segment A (°C) | | 100 | 100 | 100 | 100 | 104 | 136 | 100 | 100 | 100 | 100 |
| Weight average molecular weight of segment A (ten thousands) | | 3.1 | 4.0 | 1.7 | 1.9 | 2.0 | 1.9 | 1.7 | 0.45 | 7.9 | 1.9 |
| Glass transition temperature of segment B (°C) | | 26 | 25 | 45 | 25 | 25 | 24 | 3 | 24 | 25 | 25 |
| Weight average molecular weight of segment B (ten thousands) | | 43.2 | 41.5 | 40.1 | 42.2 | 42.0 | 41.5 | 44.0 | 42.0 | 41.5 | 43.0 |
| Weight average molecular weight of a block copolymer (ten thousands) | | 18.7 | 19.1 | 18.5 | 17.8 | 18.6 | 18.2 | 18.8 | 18.7 | 19.6 | 18.7 |
| Melt flow index (g/10 min.) | | 3.6 | 3.2 | 2.9 | 3.9 | 3.6 | 3.0 | 3.8 | 4.5 | 2.3 | 4.8 |

- to be continued -

EP 0 366 486 A2

EP 0 366 486 A2

TABLE I (continued)

| | Example | | | | | | | Comparative Example | | |
|---|---|---|---|---|---|---|---|---|---|---|
| | 2 | 3 | 4 | 5 | 6 | 7 | 8 | 1 | 2 | 3 |
| Shape-return rate (1) (%) | 94 | 97 | 94 | 97 | 92 | 93 | 94 | 98 | 93 | 0 |
| State of whitening * | — | — | — | — | — | — | — | — | cut | — |
| Shape-return rate (2) (%) | 89 | 92 | 93 | 96 | 94 | 95 | 95 | 61 | — | 0 |

*: – indicates no change, however, in Example 3, a small amount of whitening was observed.

1. A block copolymer comprising at least two polymer segments A, which are the same or different, having a glass transition temperature of 60°C to 250°C, and at least one amorphous polymer segment B having a glass transition temperature of not less than -30°C and at least 20°C below the lowest glass transition temperature of any of the polymer segments A; and wherein the ratio by weight of all the polymer segments A to all of the polymer segments B is from 10:90 to 70:30.

2. A block copolymer according to claim 1 in which at least one of the polymer segments A includes an aromatic vinyl monomer unit.

3. A block copolymer according to claim 1 or 2 in which at least one of the polymer segments A is a homopolymer of an aromatic vinyl monomer, a copolymer of an aromatic vinyl monomer and another aromatic vinyl monomer copolymerizable therewith, or a copolymer of an aromatic vinyl monomer and a conjugated diene monomer which includes at least 50 % of aromatic vinyl monomer units.

4. A block copolymer according to any one of the preceding claims in which the polymer segment B is a homopolymer of a conjugated diene monomer, a copolymer of conjugated diene monomer and another conjugated diene monomer copolymerizable therewith, or a copolymer of a conjugated diene monomer and an aromatic vinyl monomer.

5. A block copolymer according to claim 4 in which the ratio by weight of the conjugated diene monomer unit to the aromatic vinyl monomer unit in the polymer segment B is from 7:30 to 5:95.

6. A block copolymer according to any one of the preceding claims in which the weight average molecular weight, calculated in terms of polystyrene, of each polymer segment A is from 5,000 to 300,000 and of polymer segment B is from 10,000 to 300,000.

7. A block copolymer according to any one of the preceding claims in which the ratio by weight of the polymer segment A to the polymer segment B is from 20:80 to 50:50.

8. A block copolymer according to any one of the preceding claims having a weight average molecular weight of from 50,000 to 800,000.

9. A block copolymer according to any one of the preceding claims wherein the structure may be represented by a general formula $(A-B)_1 A$, $(A-B)_m$ or $(A-B)_n X$, wherein A represents a polymer segment A; B represents a polymer segment B; 1 is an integer from 1 to 5, m is an integer from 2 to 5, n is an integer from 2 to 10 and X represents a residue of a coupling agent having 2 to 10 functionalities, or wherein the structure is such that singular or plural polymer chains having a polymer segment A and a polymer segment B are branched from plural points of a main chain which includes a polymer segment A and/or a polymer segment B.

10. A block copolymer composition comprising a block copolymer as claimed in any one of claims 1 to 9 and one or more of a softener, plasticizer, antioxidant, thermal stabilizer, ultraviolet ray absorbent and filler.

11. A method of making a product capable of memorising its shape, which comprises molding a block copolymer as claimed in any one of claims 1 to 9, or a composition as claimed in claim 10, at a temperature of not less than the highest glass transition temperature of all of the polymer segments A.

12. A method according to claim 11 which further comprises deforming the molded block copolymer to an arbitrary shape at a lower temperature than the lowest glass transition temperature of all of the polymer segments A and fixing that deformation by cooling at a temperature of not more than the lowest glass transition temperature of all of the polymer segments B.

13. A moulded product which comprises a block copolymer as claimed in any one of claims 1 to 9 and which has the memory of another shape.